# EUROPÄISCHE PATENTANMELDUNG

(11) **EP 3 564 720 A1**
(43) Veröffentlichungstag der Anmeldung: **06.11.2019**
(21) Anmeldenummer: 19172839.3
(22) Anmeldetag: 06.05.2019
(51) Int. Cl.: G02B 6/27, G02B 6/42, H04B 10/2525, G01N 21/21, G02B 6/10

(54) **POLARISATIONSERHALTENDE FASERSTRECKE MIT EINER VORRICHTUNG ZUR KOMPENSATION EINER CHROMATISCHEN DISPERSION EINES POLARISIERTEN LASERSTRAHLS**

(30) Priorität: 04.05.2018 DE 102018110699
(71) Anmelder: Deutsches Elektronen-Synchrotron DESY, 22607 Hamburg (DE)
(72) Erfinder: Sydlo, Cezary, 5200 Brugg AG (DE); Schlarb, Holger, 22549 Hamburg (DE); Zummack, Falco, 23623 Gnissau (DE); Lamb, Thorsten, 22527 Hamburg (DE); Schulz, Sebastian, 20259 Hamburg (DE)
(74) Vertreter: Bird & Bird LLP

(57) **Zusammenfassung**

Dargestellt und beansprucht ist eine polarisationserhaltende Faserstrecke zum Leiten eines polarisierten Laserstrahls von einer Laserquelle zu einer Probe sowie eines von der Probe reflektierten Anteils des polarisierten Laserstrahls zu einer Auswertungsvorrichtung, wobei die polarisationserhaltende Faserstrecke einen ersten Lichtwellenleiter, einen zweiten Lichtwellenleiter und eine Kompensationsvorrichtung zur Kompensation einer chromatischen Dispersion eines des polarisierten Laserstrahls aufweist, die von dem von der Laserquelle emittierten Laserstrahl und dem von der Probe reflektieren Anteil des Laserstrahls durchlaufen wird. Weiterhin ist die Verwendung einer solchen polarisationserhaltenden Faserstrecke dargestellt und beansprucht

## Beschreibung

Die vorliegende Erfindung betrifft eine polarisationserhaltende Faserstrecke mit einer Kompensationsvorrichtung zur Kompensation einer chromatischen Dispersion eines polarisierten Laserstrahls. Weiterhin betrifft die Erfindung die Verwendung einer entsprechenden polarisationserhaltenden Faserstrecke.

Auch in polarisationserhaltenden Glasfaserstrecken, die zum Leiten eines Laserstrahls von einer Laserquelle zu einer Probe und zum Leiten eines von der Probe reflektierten Anteils des Laserstrahls von der Probe zu einer Auswertevorrichtung verwendet werden, muss die chromatische Dispersion eines in der Glasfaserstrecke eingekoppelten Laserstrahls kompensiert werden. Hierzu wird eine entsprechende Kompensationsvorrichtung in der Glasfaserstrecke eingebunden. Diese umfasst neben der eigentlich dispersionskompensierenden Faserstrecke auch eine optische Verzögerungsstrecke sowie einen optischen Verstärker. Der Laserstrahl wird, nachdem er die optische Verzögerungsstrecke, die dispersionskompensierende Faserstrecke sowie den optischen Verstärker durchlaufen hat, direkt in eine polarisationserhaltende Glasfaser eingekoppelt.

Eine solche Kompensationsvorrichtung polarisationserhaltend auszuführen ist zum einen äußerst kostspielig, da alle lichtführenden Komponenten der Kompensationsvorrichtung die Polarisation des Laserstrahls erhalten müssen. Daher können in den lichtführenden Komponenten ausschließlich polarisationserhaltende Glasfasern verwendet werden, die um ein Vielfaches teurer sind als konventionelle Einmodenfasern, die nicht polarisationserhaltend sind. Dies betrifft insbesondere die Glasfasern, die in piezobasierten Verzögerungsstrecken wie beispielsweise piezobasierten Faserstreckern, der dispersionskompensierenden Faserstrecke und dem optischen Verstärker verwendet werden. Auch ist das Verbinden oder Spleißen von polarisationserhaltenden Glasfasern und auch deren Vermessung technisch aufwendiger als das Spleißen von konventionellen Einmodenfasern. Schließlich müssen bei Freistrahlstrecken, die regelmäßig neben den piezobasierten Faserstreckern Teil der optischen Verzögerungsstrecke sind, geeignete Maßnahmen getroffen werden, um die Polarisation des Laserstrahls zu erhalten. Dadurch wird der Aufbau der Kompensationsvorrichtung komplexer und teurer. Zudem sind dispersionskompensierende Glasfasern, die die Polarisation erhalten, nur von einem einzigen Hersteller und nur in bestimmten Bauformen verfügbar, was die Nutzbarkeit der Fasern einschränkt und zudem den Preis erhöht.

Vor diesem Hintergrund ist es eine Aufgabe der vorliegenden Erfindung, eine technisch weniger aufwendige und auch kostengünstigere Faserstrecke mit einer Kompensationsvorrichtung zur Kompensation der chromatischen Dispersion eines polarisierten Laserstrahls bereitzustellen.

Die vorliegende Erfindung löst diese Aufgabe mit einer polarisationserhaltenden Faserstrecke nach Anspruch 1 sowie der Verwendung einer entsprechenden Faserstrecke gemäß Anspruch 9. Bevorzugte Ausführungsformen sind Gegenstand der abhängigen Ansprüche.

In einem ersten Aspekt wird die Aufgabe durch eine polarisationserhaltende Faserstrecke zum Leiten eines polarisierten Laserstrahls von einer Laserquelle zu einer Probe sowie eines von der Probe reflektierten Anteils des polarisierten Laserstrahls zu einer Auswertungsvorrichtung gelöst, wobei die polarisationserhaltende Faserstrecke einen ersten polarisationserhaltenden Lichtwellenleiter, einen zweiten polarisationserhaltenden Lichtwellenleiter und eine Kompensationsvorrichtung zur Kompensation einer chromatischen Dispersion eines polarisierten Laserstrahls aufweist. Die Kompensationsvorrichtung weist ein Einkopplungselement zum Einkoppeln eines Laserstrahls in die Kompensationsvorrichtung, ein Auskopplungselement zum Auskoppeln eines Laserstrahls aus der Kompensationsvorrichtung, einen polarisierenden Strahlteiler mit einem ersten Anschluss, einem zweiten Anschluss und einem dritten Anschluss, eine Kompensationsstrecke und einen Faradayspiegel auf. Diese sind so angeordnet, dass ein aus dem ersten Lichtwellenleiter durch das Einkopplungselement eingekoppelter Laserstrahl durch den ersten Anschluss in den Strahlteiler eintritt, linear polarisiert aus dem zweiten Anschluss aus dem Strahlteiler austritt, die Kompensationsstrecke durchläuft, vom Faradayspiegel reflektiert wird, die Kompensationsstrecke erneut durchläuft, in den Strahlteiler durch den zweiten Anschluss eintritt, linear polarisiert aus dem dritten Anschluss aus dem Strahlteiler austritt und mit dem Auskopplungselement in den zweiten Lichtwellenleiter eingekoppelt wird. Der Faradayspiegel ist so ausgebildet, dass eine Polarisation eines in den Faradayspiegel einfallenden Laserstrahls orthogonal zu der Polarisation des aus dem Faradayspiegel ausfallenden Laserstrahls ist. Die Kompensationsstrecke umfasst einen dispersionskompensierenden Lichtwellenleiter. Der polarisierende Strahlteiler ist so angeordnet, dass ein durch den ersten Anschluss in den Strahlteiler eingekoppelter Laserstrahl nicht direkt aus dem dritten Anschluss wieder aus dem Strahlteiler ausgekoppelt wird. Der erste Lichtwellenleiter ist dazu ausgebildet, einen polarisierten Laserstrahl von einer Laserquelle zum Einkopplungselement zu leiten und ist polarisationserhaltend ausgeführt. Der zweite Lichtwellenleiter ist dazu ausgebildet, einen aus der Kompensationsvorrichtung durch das Auskoppelungselement ausgekoppelten polarisierten Laserstrahl polarisationserhaltend zu einer Probe zu leiten. Der zweite Lichtwellenleiter ist weiter dazu ausgebildet, einen von der Probe reflektieren Anteil des Laserstrahls zurück zum Auskopplungselement zu leiten, so dass der reflektierte Anteil des Laserstrahls durch das Auskoppelungselement wieder in die Kompensationsvorrichtung eingekoppelt wird, durch den dritten Anschluss in den Strahlteiler eintritt, linear polarisiert aus dem zweiten Anschluss aus dem Strahlteiler austritt, die Kompensationsstrecke durchläuft, vom Faradayspiegel reflektiert wird, die Kompensationsstrecke erneut durchläuft, in den Strahlteiler durch den zweiten Anschluss eintritt, linear polarisiert aus dem ersten Anschluss aus dem Strahlteiler austritt und mit dem Einkopplungselement in den ersten Lichtwellenleiter eingekoppelt wird. Der erste Lichtwellenleiter ist schließlich dazu ausgebildet, den von der Probe reflektierten Anteil des Laserstrahls, der durch das Einkopplungselement in den erste Lichtwellenleiter eingekoppelt wurde, zu einer Auswertungsvorrichtung zu leiten. Auf vorteilhafte Weise werden dabei die erste und die zweite Faserstrecke in beide Richtungen, d.h., von der Laserquelle zur Kompensationsvorrichtung und zurück (erste Faserstrecke) sowie von der Kompensationsverrichtung zur Probe und zurück (zweite Faserstrecke) jeweils in der gleichen Polarisationsrichtung durchlaufen, so dass die Dispersion und die Ankunftszeit des Laserstrahls bzw. des reflektierten Anteils des Laserstrahls korrigiert werden.

Mit anderen Worten umfasst die polarisationserhaltende Faserstrecke zwei polarisationserhaltende Lichtwellenleiter sowie eine Kompensationsvorrichtung, die von einem Laserstrahl in zwei Richtungen durchlaufen wird. Die Kompensationsvorrichtung umfasst zunächst ein Einkopplungselement und ein Auskopplungselement, durch die ein Laserstrahl jeweils aus einem Lichtwellenleiter in die Kompensationsvorrichtung eingekoppelt und auch wieder ausgekoppelt werden kann. Zwischen der eigentlichen langen Faserstrecke, die von dem ersten und dem zweiten Lichtwellenleiter gebildet werden, und dem Ein- bzw. Auskopplungselement können noch weitere optische Elemente, beispielsweise Anordnungen zur Stabilisierung eines Laserstrahls, angeordnet sein. Das Einkopplungselement wird somit auch zum Auskoppeln eines Laserstrahls aus der Kompensationsvorrichtung verwendet, der durch das Auskopplungselement in die Kompensationsvorrichtung eingekoppelt worden ist. Die Kompensationsvorrichtung wird mit anderen Worten von einem Laserstrahl in zwei Richtungen durchlaufen.

Weiterhin umfasst die Kompensationsvorrichtung einen linear polarisierenden Strahlteiler mit drei Anschlüssen: einem ersten Anschluss, einem zweiten Anschluss und einem dritten Anschluss. Der erste Anschluss des linear polarisierenden Strahlteilers ist mit dem Einkopplungselement verbunden und der dritte Anschluss des linear polarisierenden Strahlteilers ist mit dem Auskopplungselement verbunden. Im Kontext der vorliegenden Erfindung sind zwei optische Elemente verbunden, wenn ein aus dem einen optischen Element austretender Laserstrahl in das andere optische Element eintreten kann. Dabei können zwischen den beiden Elementen jedoch noch weitere optische Elemente, insbesondere Lichtwellenleiter, angeordnet sein. Der polarisierende Strahlteiler teilt den einfallenden Laserstrahl in zwei Komponenten auf, die beide linear polarisiert sind und in unterschiedliche Richtungen aus dem Strahlteiler austreten. Der Strahlteiler ist so angeordnet, dass keine der beiden Komponenten des durch den ersten Anschluss eintretenden Lichtstrahls aus dem dritten Anschluss wieder aus dem Strahlteiler ausgekoppelt wird.

Eine der beiden Komponenten des durch den ersten Anschluss eingekoppelten Laserstrahls wird aus dem zweiten Anschluss aus dem polarisierenden Strahlteiler ausgekoppelt und durchläuft im Anschluss eine Kompensationsstrecke. Die Kompensationsstrecke umfasst zumindest einen dispersionskompensierenden Lichtwellenleiter, der auch als dispersionskompensierende Faserstrecke bezeichnet wird. Der dispersionskompensierende Lichtwellenleiter ist vorzugsweise aus einer Einmodenfaser gebildet, die nicht polarisationserhaltend ist, dafür aber die in der Faserstrecke auftretende chromatische Dispersion korrigiert.

Im Anschluss an die Kompensationsstrecke trifft der Laserstrahl auf einen Faradayspiegel, der den Laserstrahl vollständig reflektiert und mit orthogonaler Polarisation wieder in die Kompensationsstrecke einkoppelt. Der Faradayspiegel umfasst vorzugsweise einen Faradayrotator und eine Spiegelfläche. Diese Komponenten sind so angeordnet, dass ein senkrecht auf eine Spiegelfläche des Spiegels auftreffender Laserstrahl zuvor den Faradayrotator, der auch als Faradaydreher bezeichnet wird, durchlaufen hat. Dabei dreht der Faradayrotator die Polarisation des Laserstrahls bei jedem Durchlauf um 45°. Nach der Reflektion auf der Spiegelfläche wird der Faradayrotator noch ein zweites Mal durchlaufen und die Polarisation des Laserstrahls nochmals um 45° in die gleiche Richtung gedreht. Der Faradayspiegel ist somit bevorzugt so ausgebildet und angeordnet, dass die Polarisation eines ausfallenden Laserstrahls, der von der Spiegelfläche reflektiert worden ist und der den Faradayrotator zwei Mal durchlaufen hat, orthogonal zu dem einfallenden Laserstrahl ist, also dem Laserstrahl, der noch nicht von dem Faradayspiegel reflektiert worden ist.

Nachdem der Laserstrahl von dem Faradayspiegel reflektiert worden ist und wieder in die Kompensationsstrecke eingekoppelt wurde, durchläuft der Laserstrahl die Kompensationsstrecke nochmals in die entgegengesetzte Richtung. Somit wird auf vorteilhafte Weise die dispersionskompensierende Faserstrecke zweimal durchlaufen. Daher kann die Länge der dispersionskompensierenden Faserstrecke halb so lang gewählt werden, wie die Länge einer dispersionskompensierenden Faserstrecke in einer bestehenden Vorrichtung zur Kompensation der chromatischen Dispersion, die nur einmal von dem Laserstrahl durchlaufen wird. Dies senkt die Kosten für die Kompensationsvorrichtung.

Wenn der Laserstrahl die Kompensationsstrecke zum zweiten Mal durchlaufen hat, wird er durch den zweiten Anschluss wieder in den polarisierenden Strahlteiler eingekoppelt, linear polarisiert und durch den dritten Anschluss aus dem Strahlteiler ausgekoppelt. Die Polarisation des Laserstrahls ist nach dem Durchlaufen des Faradayspiegels orthogonal zu der Polarisation des Laserstrahls, der aus dem ersten Anschluss des Strahlteilers ursprünglich ausgekoppelt wurde. Daher wird der Anteil des Laserstrahls, der nach dem Durchlaufen der Kompensationsvorrichtung orthogonal linear polarisiert ist, durch den polarisierenden Strahlteiler in das Auskopplungselement geleitet und von dort beispielsweise in einen zweiten Lichtwellenleiter ausgekoppelt. Zwischen dem Auskopplungselement und dem zweiten Lichtwellenleiter können noch weitere optische Komponenten angeordnet sein. Diese sollten aber vorzugsweise polarisationserhaltend ausgebildet sein.

Die anspruchsgemäße Kompensationsvorrichtung hat den Vorteil, dass der durch das Auskopplungselement ausgekoppelte Laserstrahl stets linear polarisiert ist, obwohl keine der Komponente der Vorrichtung polarisationserhaltend ausgeführt ist. Vielmehr können sämtliche in der Vorrichtung verwendeten Faserstrecken als einfache Einmodenfasern ausgebildet sein, die nicht polarisationserhaltend sind. Die Kosten für die Vorrichtung sind zudem gegenüber einer herkömmlichen Vorrichtung zur Kompensation reduziert, da der Laserstrahl die Kompensationsstrecke zweimal durchläuft. Daher kann die Länge der Kompensationsstrecke halbiert werden, was regelmäßig die Kosten für die benötigten Lichtwellenleiter ebenfalls halbiert. Schließlich hat die Kompensationsvorrichtung den weiteren Vorteil, dass inhärent auch der negative Effekt der Polarisationsmodendispersion korrigiert wird.

Die polarisationserhaltende Faserstrecke umfasst weiterhin den ersten und den zweiten Lichtwellenleiter. Der erste Lichtwellenleiter ist so angeordnet, dass ein von einer Laserquelle erzeugter Laserstrahl von dem ersten Lichtwellenleiter zu der Kompensationsvorrichtung geleitet bzw. geführt werden kann. Dabei können zwischen dem ersten Lichtwellenleiter und der Laserquelle noch weitere polarisationserhaltende optische Komponenten im Strahlgang angeordnet sein. Nachdem der Laserstrahl die Kompensationsvorrichtung durchlaufen und in den zweiten Lichtwellenleiter wieder eingekoppelt wurde, wird er vom zweiten Lichtwellenleiter zu einer Probe geleitet. Zwischen der Probe und dem zweiten Lichtwellenleiter können ebenfalls noch weitere polarisationserhaltende optische Komponenten angeordnet sein. Eine von der Probe reflektieren Anteil des Laserstrahls wird mit dem zweiten Lichtwellenleiter wieder zurück zu der Kompensationsvorrichtung geführt, durchläuft diese ein zweites Mal vollständig, d.h., insgesamt vier Mal, und wird dann mit dem ersten Lichtwellenleiter hin zu einer Auswertungsvorrichtung geführt. Zwischen dem ersten Lichtwellenleiter und der Auswertungsvorrichtung können weitere optische Elemente angeordnet sein.

Die polarisationserhaltende Faserstrecke ist somit so aufgebaut, dass die Kompensationsvorrichtung insgesamt vier Mal und insbesondere in jeder Polarisationsrichtung zwei Mal durchlaufen wird. Damit kann sichergestellt werden, dass die Laufzeit des Laserstrahls zwischen der Auswertevorrichtung und der Probe, sowie die Laufzeit des reflektierten Laserstrahles von der Probe bis zur Auswertevorrichtung gleich sind. Dies erfordert den Durchlauf der Kompensationsvorrichtung in beiden Polarisationsachsen für den vorlaufenden Laserstrahl, d.h., auf dem Weg von der Laserquelle zur Probe, sowie den rücklaufenden Laserstrahl, d.h., den reflektierten Anteil des Laserstrahls auf dem Weg von der Probe zur Auswertevorrichtung.

In einer bevorzugten Ausführungsform umfasst die Kompensationsstrecke eine optische Verzögerungsstrecke, mit der der Laserstrahl stabilisiert und Schwankungen in der Laufzeit des Laserstrahls durch die Lichtwellenleiter kompensiert werden können. Da die optische Verzögerungsstrecke Teil der Kompensationsvorrichtung ist und auf eine Laufstrecke des Laserstrahls bezogen zwischen dem polarisierenden Strahlteiler und dem Faradayspiegel angeordnet ist, muss auch die optische Verzögerungsstrecke nicht polarisationserhaltend ausgebildet sein.

Vorzugweise umfasst die optische Verzögerungsstrecke eine piezobasierte Verzögerungsstrecke, die beispielsweise von einem piezobasierten Faserstrecker gebildet wird. Dabei ist es bevorzugt, wenn die piezobasierte Verzögerungsstrecke als Einmodenfaser ausgebildet ist, die nicht polarisationserhaltend ist. Dies senkt die Kosten gegenüber einer herkömmlichen Kompensationsvorrichtung. Durch eine piezobasierte Verzögerungsstrecke kann die Laufzeit des Laserstrahls mit sehr hoher Frequenz verändert werden. Dafür ist jedoch die maximale Änderung der Laufzeit beschränkt.

Weiterhin ist es bevorzugt, wenn die optische Verzögerungsstrecke zusätzlich oder ergänzend eine zweite Verzögerungsstrecke mit größer Verzögerungsbereich, zum Beispiel durch eine Freistrahlverzögerungsstrecke, ohne polarisationserhaltende Elemente umfasst. Die zweite Verzögerungsstrecke kann vorzugsweise auch von einer langen Einmodenfaser gebildet, die mit einer Heiz- bzw. Kühlvorrichtung versehen ist, über die die Temperatur der Einmodenfaser und damit über die Temperatur die Laufzeit des Laserstrahls verändert werden kann. Auch für eine solche zweite Verzögerungsstrecke gilt, dass eine gleichmäßige Verzögerung nur erreicht wird, wenn die zweite Verzögerungsstrecke vom vorlaufenden und vom rücklaufenden Laserstrahl jeweils in beiden Polarisationsrichtungen durchlaufen wird. Auch die Verwendung einer zweiten Verzögerungsstrecke mit großer Verzögerung, die nicht polarisationserhaltend ausgestaltet ist, reduziert die Kosten für die Herstellung der Vorrichtung. Mit der zweiten Verzögerungsstrecke kann die Laufzeit des Laserstrahls über größere Bereiche verändert werden. Dafür benötigt jede Änderung einer optischen Länge der zweiten Verzögerungsstrecke deutlich mehr Zeit als die Änderungen der optischen Länge des piezobasierten Faserstreckers. Die Frequenz, mit der die optische Länge geändert werden kann, ist somit geringer.

Es ist zudem bevorzugt, wenn die Kompensationsstrecke einen optischen Verstärker umfasst, der nicht polarisationserhaltend ausgebildet ist. Der optische Verstärker ist weiter bevorzugt ein Faserverstärker, beispielsweise ein Erbium-dotierter Faserverstärker, der von einer Einmodenfaser gebildet wird. Die Verwendung von optischen Verstärkern, die nicht polarisationserhaltend sind, senkt wiederum die Kosten der Kompensationsvorrichtung.

In einer bevorzugten Ausführungsform ist der optische Verstärker in einem Strahlgang des Laserstrahls zwischen dem Strahlteiler und dem dispersionskompensierenden Lichtwellenleiter angeordnet. Es ist weiter bevorzugt, wenn der optische Verstärker im Strahlgang des Laserstrahls zwischen dem Strahlteiler und der optischen Verzögerungsstrecke angeordnet ist, sofern die Kompensationsstrecke eine optische Verzögerungsstrecke umfasst. Mit anderen Worten wird der optische Verstärker von dem aus dem Strahlteiler austretenden Laserstrahl als erste Komponente der Kompensationsstrecke durchlaufen. Weiterhin durchläuft der Laserstrahl den optischen Verstärker auch noch ein weiteres Mal, nachdem er alle anderen Komponenten der Kompensationsstrecke doppelt durchlaufen hat und vom Faradayspiegel reflektiert worden ist. Diese Abfolge der optischen Elemente im Strahlgang des Laserstrahls hat sich als besonders vorteilhaft erwiesen, da der optische Verstärker im Regelfall eine konstante Ausgangsleistung aufweist und keine konstante Verstärkung. Da alle übrigen Elemente der Kompensationsstrecke die Leistung des Laserstrahls verringern, wird so eine konstante Ausgangsleistung aus der Kompensationsvorrichtung in die nachfolgende Faserstrecke eingekoppelt. Dies gilt sowohl für den Laserstrahl, der zur Probe geführt wird, als auch für den von der Probe reflektier Anteil des Laserstrahls, der zur Auswertungsvorrichtung geführt wird.

In einem zweiten Aspekt betrifft die Erfindung die Verwendung einer polarisationserhaltenden Faserstrecke nach einem der vorhergehenden Ausführungsformen zum Leiten eines polarisierten Laserstrahls von einer Laserquelle zu einer Probe, zum Leiten eines von der Probe reflektierten Anteils des Laserstrahls von der Probe zu einer Auswertungsvorrichtung und zur Kompensation einer chromatischen Dispersion des polarisierten Laserstrahls sowie des von der Probe reflektierten Anteils des Laserstrahls. Die Vorteile der Verwendung einer solchen Faserstrecke entsprechen den Vorteilen der jeweiligen Ausführungsformen der verwendeten Faserstrecke und der darin verwendeten Kompensationsvorrichtung. Insbesondere kann die Kompensationsvorrichtung aber hergestellt werden, ohne dass hierfür polarisationserhaltende Komponenten benötigt werden.

Nachfolgend werden wir die vorliegende Erfindung anhand eines Ausführungsbeispiels unter Bezugnahme auf die Zeichnungen näher beschreiben, dabei zeigt
- Figur 1: einen Aufbau eines Ausführungsbeispiels einer Kompensationsvorrichtung und
- Figur 2: einen Aufbau eines Ausführungsbeispiels einer Faserstrecke mit der Kompensationsvorrichtung auf Figur 1.

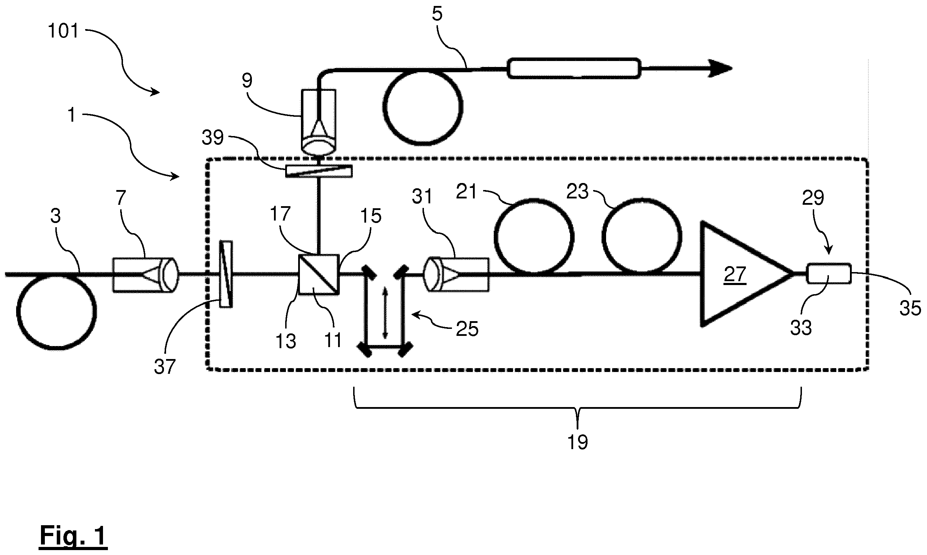

Figur 1 zeigt ein Ausführungsbeispiel einer Kompensationsvorrichtung 1 zur Kompensation der chromatischen Dispersion eines polarisierten Laserstrahls. Die dargestellte Kompensationsvorrichtung 1 wird zur Kompensation der chromatischen Dispersion in einer polarisationserhaltenden Faserstrecke 101 verwendet, die vorliegend von einem ersten polarisationserhaltenden Wellenleiter 3, einem zweiten polarisationserhaltenden Wellenleiter 5 und der Kompensationsvorrichtung 1 gebildet wird. Die Kompensationsvorrichtung umfasst ein Einkopplungselement 7 und ein Auskopplungselement 9, mit denen die Kompensationsvorrichtung in die Fasertrecke 3, 5 eingebunden ist.

Weiterhin umfasst die Kompensationsvorrichtung 1 einen polarisierenden Strahlteiler 11, mit einem ersten Anschluss 13, einem zweiten Anschluss 15 und einem dritten Anschluss 17. Der Strahlteiler 11 ist so angeordnet, dass ein über das Einkopplungselement 7 in die Vorrichtung 1 eingekoppelter Laserstrahl durch den ersten Anschluss 13 in den Strahlteiler 11 eintritt. Zwischen dem Strahlteiler 11 und dem Einkopplungselement 7 bzw. zwischen dem Strahlteiler 11 und dem Auskopplungselement 9 können weitere optische Elemente, wie beispielsweise die im Ausführungsbeispiel dargestellte Halbwellenverzögerungsplatten 37, 38 im Strahlgang angeordnet sein. Mittels der Halbwellenverzögerungsplatten 37, 39 können unterschiedliche Ausrichtungen der Polarisationsachsen des Einkopplungselements 7, des Auskopplungselements 9 und des polarisierenden Strahlteilers 11 kompensiert werden. Dies ist notwendig, da die Polarisationsachsen des Einkopplungselements 7, bzw. des Auskoppelelements 9, anders als die Polarisationsachse des Strahlteilers 11, nicht bekannt sind.

Der durch den ersten Anschluss 13 in den Strahlteiler 11 eingefallene Laserstrahl wird in zwei linear polarisierte Teilstrahlen aufgeteilt. Einer der beiden Teilstrahlen tritt durch den zweiten Anschluss 15 wieder aus dem Strahlteiler 11 aus. Der zweite Teilstrahl tritt durch einen vierten, nicht näher bezeichneten Anschluss aus dem Strahlteiler 11 wieder aus, tritt jedoch insbesondere nicht direkt durch den dritten Anschluss 17 wieder aus dem Strahlteiler 11 aus. Dadurch wird der Laserstrahl durch den Strahlteiler 11 um Anteile bereinigt, die nicht in der gewünschten Richtung linear polarisiert waren.

Der aus dem zweiten Anschluss 15 ausgetretene Laserstrahl durchläuft nachfolgend eine Kompensationstrecke 19, die einen dispersionskompensierenden Lichtwellenleiter 21, eine optische Verzögerungsstrecke 23, 25 und einen optischen Verstärker 27 umfasst, bevor er von einem Faradayspiegel 29 reflektiert wird und die Kompensationsstrecke 19 ein zweites Mal in umgekehrter Reihenfolge durchläuft.

Als erstes Element der Kompensationstrecke 19 durchläuft der Laserstrahl eine Freistrahlverzögerungsstrecke 25, die zusammen mit einer piezobasierten Verzögerungsstrecke 23 in Form eines piezobasierten Faserstreckers 23 die optische Verzögerungsstrecke 23, 25 bildet. Die Freistrahlverzögerungsstrecke 25 ist eine Spiegelanordnung, deren optische Länge durch einen nicht dargestellten Motor verändert werden kann. Damit können Laufzeitvariationen in der Faserstrecke 3, 5 kompensiert werden. Die Freistrahlverzögerungsstrecke 25 weist auf vorteilhafte Weise keine polarisationserhaltenden Komponenten auf.

Im Strahlgang des Laserstrahls ist nachfolgend ein Kopplungselement 31 angeordnet, mit dem der Laserstrahl aus der Freistrahlverzögerungsstrecke 25 in den optischen Verstärker 27 in Form eines Faserverstärker ein, der einen Erbium-dotierte Wellenleiter aufweist und daher auch als Erbium-dotierter Faserverstärker bezeichnet wird. Auch dieser Wellenleiter ist lediglich als Einmodenfaser ausgebildet und somit nicht polarisationserhaltend. Auch Erbium-dotierte Wellenleiter sind deutlich günstiger, wenn sie nicht polarisationserhaltend ausgebildet sind. Es hat sich als vorteilhaft erwiesen, den optischen Verstärker 27 im Strahlgang des Laserstrahls zwischen dem Strahlteiler 11 und den übrigen, faserbasierten Elementen 21, 23 der Kompensationstrecke 19 anzuordnen, da der optische Verstärker 27 keine konstante Verstärkung bereitstellt, sondern eine konstante Ausgangsleistung. Alle weiteren Elemente der Kompensationstrecke 19 reduzieren die Leistung des Laserstrahls.

Aus dem optischen Verstärker 27 tritt der Laserstrahl in den dispersionskompensierenden Wellenleiter 21 ein. Der dispersionskompensierende Wellenleiter 21 ist als Einmodenfaser ausgebildet, die nicht polarisationserhaltend ist. Ein solcher Wellenleiter 21 ist um ein vielfaches günstiger, als ein polarisationserhaltender Wellenleiter, der die chromatische Dispersion kompensiert.

Nach dem dispersionskompensierenden Wellenleiter 21 durchläuft der Laserstrahl den piezobasierten Faserstrecker 23. Der Wellenleiter des Faserstreckers 23 ist ebenfalls als Einmodenfaser ausgebildet und damit nicht polarisationserhaltend, dafür aber deutlich kostengünstiger als ein vergleichbarer polarisationserhaltender Faserstrecker.

Schließlich trifft der Laserstrahl auf den Faradayspiegel 29. Dieser reflektiert den Laserstrahl vollständig und dreht dabei die Polarisation des Laserstrahls, so dass der aus dem Faradayspiegel 29 ausfallende Laserstrahl orthogonal zu dem auf dem Faradayspiegel 29 einfallenden Laserstrahl polarisiert ist. Hierzu weist der Faradayspiegel 29 einen Faradayrotator 33 und eine Spiegelfläche 35 auf. Der Faradayrotator 33 ist so ausgebildet, dass er die Polarisation eines linear polarisierten Laserstrahls bei jedem Durchlauf durch den Faradayrotator 33 um 45° dreht. Daher wird die Polarisation eines linear polarisierten Laserstrahls der zunächst den Faradayrotator 33 durchläuft, dann von der Spiegelfläche 35 reflektiert wird, bevor er den Faradayrotator 33 ein zweites Mal durchläuft, um insgesamt 90° gedreht, so dass die Polarisation des reflektierten Laserstrahls orthogonal zu der Polarisation des einfallenden Laserstrahls ist.

Der reflektierte Laserstrahl durchläuft dann nochmals die Kompensationsstrecke 19 in umgekehrter Reihenfolge und wird daher nochmals vom optischen Verstärker 27 verstärkt, die chromatische Dispersion wird in dem dispersionskompensierenden Wellenleiter 21 weiter kompensiert und die Laufzeit wird in der optischen Verzögerungsstrecke 23, 25 weiter angepasst. Da sämtliche Komponenten der Kompensationsstrecke 19 doppelt durchlaufen werden, müssen diese im Vergleich zu Komponenten einer herkömmlichen Kompensationsstrecke nur halb so lang sein. Auch dies reduziert die Kosten der einzelnen Komponenten, insbesondere der Komponenten, die Lichtwellenleiter umfassen.

Aus der Kompensationsstrecke 19 tritt der Laserstrahl durch den zweiten Anschluss 15 in den Strahlteiler 11 ein. Da die Polarisation des durch den zweiten Anschluss 15 eintretenden Laserstrahls orthogonal zu der Polarisation des Laserstrahls ist, der durch den Anschluss 15 austritt, wird der Laserstrahl zum dritten Anschluss 17 hin umgelenkt bzw. reflektiert und tritt dort aus dem Strahlteiler 11 aus. Dabei wird der Laserstrahl von dem Strahlteiler 11 nochmals linear polarisiert, bevor er durch das Auskopplungselement 9 in den zweiten Lichtwellenleiter 5 der polarisationserhaltenden Faserstrecke 3, 5 eingekoppelt wird. Zwischen dem Strahlteiler 11 und dem Auskopplungselement 9 ist eine Halbwellenverzögerungsplatte 39 angeordnet, um die bekannten Polarisationsachsen aus dem polarisierenden Strahlteiler 11 in die unbekannten Polarisationsachsen des Auskopplungselements 9 einzukoppeln.

Die Kompensationsvorrichtung 1 macht es damit auf besonders vorteilhafte Weise möglich, die chromatische Dispersion in einer polarisationserhaltenden Faserstrecke 3, 5 zu kompensieren, ohne das hierfür polarisationserhaltende Komponenten in der Vorrichtung 1 verwendet werden müssen. Insbesondere können die Lichtwellenleiter, die Teil der Kompensationsstrecke 19 sind, als kostengünstige Einmodenfasern ausgeführt sein.

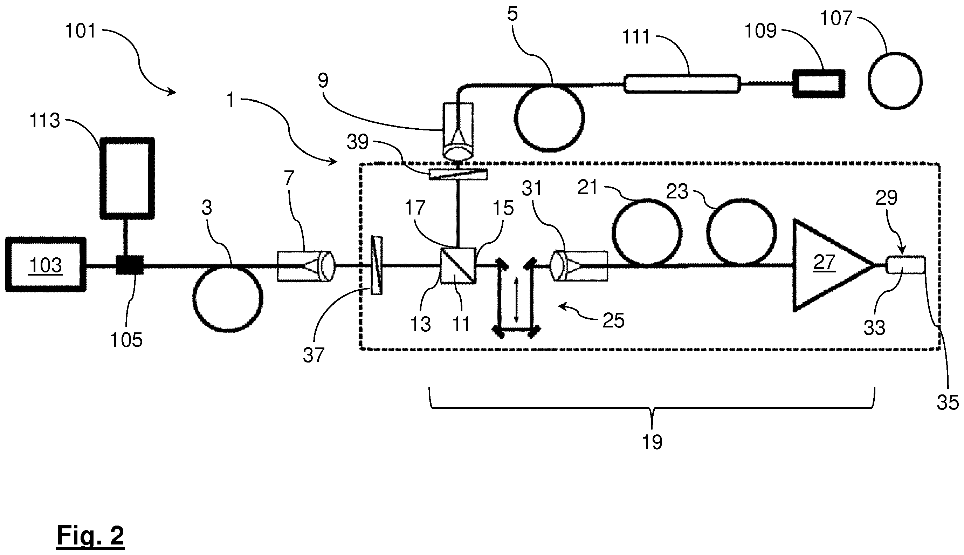

Die Kompensationsvorrichtung 1 kann zudem auch von einem Laserstrahl in der umgekehrten Richtung durchlaufen werden, wie nachfolgend bezugnehmend auf Figur 2 noch näher dargelegt wird, also einem Laserstrahl, der durch das Auskopplungselement 9 in die Kompensationsvorrichtung 1 eingekoppelt und durch das Einkopplungselement 7 aus der Kompensationsvorrichtung 1 ausgekoppelt wird. Dies ist besonders vorteilhaft, wenn der Laserstrahl mit der polarisationserhaltenden Laserstrecke 3, 5 zunächst zu einer Probe transportiert wird, von der Probe (teilweise) reflektiert wird und nachfolgend wieder mit der gleichen polarisationserhaltenden Laserstrecke 3, 5 zurück zu einer Auswertungsvorrichtung transportiert wird, da der Laserstrahl die Kompensationsvorrichtung insgesamt vier Mal durchläuft. Dabei wird insbesondere die Kompensationsstrecke in jeder linearen Polarisationsrichtung zwei Mal durchlauf, so dass aufgrund der Polarisationsabhängigkeit der Kompensation der chromatischen Dispersion eine vollständige Kompensation erreicht werden kann. Zum weiteren kann gewährleistet werden, dass die Laufzeit des Laserstrahls zwischen der Auswertevorrichtung und der Probe, sowie die Laufzeit des reflektierten Laserstrahles von der Probe bis zur Auswertevorrichtung gleich sind. Diese ist erforderlich für eine Laufzeitstabilisierung des Laserstrahls an der Probe unter Nutzung einer Auswertevorrichtung und Ansteuerung der Verzögerungsstrecken. Der Strahlteiler 11 kann auch als faserintegrierter Strahlteiler ausgebildet sein, der deutlich kompakter ist. In diesem Fall werden die Halbwellenverzögerungsplatten 37, 39 nicht benötigt. Zudem werden das Einkopplungselement 7 und das Auskopplungselement 9 jeweils durch den Übergang zwischen dem faserintegrierten Strahlteiler und den polarisationserhaltenden Faserstrecken 3, 5 gebildet. Zudem müsste ein zusätzliches Auskopplungselement zwischen dem Strahlteiler 11 und der optischen Freistrahlverzögerungsstrecke 25 angeordnet sein.

In Figur 2 ist die Faserstrecke 101 aus Figur 1 mit ergänzenden Elementen gezeigt. Da der Aufbau der Faserstrecke 101 identisch zu der aus Figur 1 ist, werden nur die Komponenten in Figur 2 gezeigten Komponenten näher beschrieben, die nicht bereits aus Figur 1 bekannt sind.

Die Faserstrecke 101 und insbesondere der erste Lichtwellenleiter 3 sind dazu ausgebildet, einen Laserstrahl aus einer Laserquelle 103 zu einem Einkopplungselement 7 der Kompensationsvorrichtung 1 zu führen bzw. zu leiten. Zwischen der Laserquelle 103 und dem ersten Lichtwellenleiter 3 können dabei weitere optische Elemente im Strahlgang angeordnet sein, wie durch den Strahlkoppler 105 angedeutet. Der Laserstrahl wird, wie bereits ausführlich besprochen, durch das Einkopplungselement 7 in die Kompensationsvorrichtung 1 eingekoppelt, durchläuft diese und wird schließlich durch den Auskopplungselement 9 in den zweiten Wellenleiter 5 eingekoppelt, der den Laserstrahl zu einer Probe 107 führt. Dabei können auch zwischen dem zweiten Wellenleiter 5 oder auch als Teil des zweiten Wellenleiters 5 weitere optische Elemente 109, 111 verwendet werden, wie in Figur 2 schematisch angedeutet.

Der zweite Wellenleiter 5 ist zudem dazu ausgebildet, einen Teil des Laserstrahls, der von der Probe 107 reflektiert worden ist, wieder zurück zur Kompensationsvorrichtung 1 zu transportieren, wo der reflektierte Teil durch das Auskopplungselement 9, das hier als Einkopplungselement fungiert, wieder in die Kompensationsvorrichtung 1 eingekoppelt wird. Der reflektierte Teil des Laserstrahls durchläuft dann ein zweites Mal die Kompensationsvorrichtung 1, so dass die eigentliche Kompensationsstrecke 19 insgesamt vier Mal durchlaufen wird. Aufgrund der Drehung der Polarisation des Laserstrahls durch den Faradayspiegel 29 läuft der Strahl dabei auf vorteilhafte Weise in beide linearen Polarisationsrichtungen zwei Mal durch die Kompensationsvorrichtung, so dass aufgrund der Polarisationsabhängigkeit der Kompensation der chromatischen Dispersion sichergestellt ist, dass diese vollständig bzw. in dem erwarteten Maß erfolgt.

Des Weiteren wird gewährleistet, dass die Laufzeit des Laserstrahls zwischen der Auswertevorrichtung und der Probe, sowie die Laufzeit des reflektierten Laserstrahles von der Probe bis zur Auswertevorrichtung gleich sind, da der Laserstrahl und der reflektierte Anteil des Laserstrahls die Faserstrecken 3, 5 jeweils mit der gleichen Polarisation durchlaufen und die Kompensationsvorrichtung jeweils in beide Richtungen mit beiden Polarisationen durchlaufen wird.

Schließlich wird der reflektierte Teil des Laserstrahls wieder durch das Einkopplungselement 7 in die erste Faserstrecke 3 eingekoppelt und über einen Strahlkoppler 105 zu einer Auswertungsvorrichtung 113 geführt und dort ausgewertet. Durch den vierfachen Durchlauf der eigentlichen Kompensationsstrecke 19 ist dabei sichergestellt, dass auch die polarisationsabhängige Kompensation vollständig durchgeführt wird.

## Patentansprüche

1. Polarisationserhaltende Faserstrecke (101) zum Leiten eines polarisierten Laserstrahls von einer Laserquelle (103) zu einer Probe (107) sowie eines von der Probe (107) reflektierten Anteils des polarisierten Laserstrahls zu einer Auswertungsvorrichtung (113), wobei die polarisationserhaltende Faserstrecke (101) einen ersten Lichtwellenleiter (3), einen zweiten Lichtwellenleiter (5) und eine Kompensationsvorrichtung (1) zur Kompensation einer chromatischen Dispersion des polarisierten Laserstrahls aufweist,
wobei die Kompensationsvorrichtung (1) ein Einkopplungselement (7) zum Einkoppeln eines Laserstrahls in die Kompensationsvorrichtung (1), ein Auskopplungselement (9) zum Auskoppeln eines Laserstrahls aus der Kompensationsvorrichtung (1), einen polarisierenden Strahlteiler (11) mit einem ersten Anschluss (13), einem zweiten Anschluss (15) und einem dritten Anschluss (17), eine Kompensationsstrecke (19) und einen Faradayspiegel (29) aufweist, die so angeordnet sind, dass ein aus dem ersten Lichtwellenleiter (3) durch das Einkopplungselement (7) eingekoppelter Laserstrahl durch den ersten Anschluss (13) in den Strahlteiler (11) eintritt, linear polarisiert aus dem zweiten Anschluss (15) aus dem Strahlteiler (11) austritt, die Kompensationsstrecke (19) durchläuft, vom Faradayspiegel (29) reflektiert wird, die Kompensationsstrecke (19) erneut durchläuft, in den Strahlteiler (11) durch den zweiten Anschluss (15) eintritt, linear polarisiert aus dem dritten Anschluss (17) aus dem Strahlteiler (11) austritt und mit dem Auskopplungselement (9) in den zweiten Lichtwellenleiter (5) eingekoppelt wird, wobei der Faradayspiegel (29) so ausgebildet ist, dass eine Polarisation eines in den Faradayspiegel (29) einfallenden Laserstrahls orthogonal zu der Polarisation des aus dem Faradayspiegel (29) ausfallenden Laserstrahls ist, wobei die Kompensationsstrecke (19) einen dispersionskompensierenden Lichtwellenleiter (21) umfasst, und wobei der polarisierende Strahlteiler (11) so angeordnet ist, dass ein durch den ersten Anschluss (13) in den Strahlteiler (11) eingekoppelter Laserstrahl nicht direkt aus dem dritten Anschluss (17) wieder aus dem Strahlteiler (11) ausgekoppelt wird,
wobei der erste Lichtwellenleiter (3) dazu ausgebildet ist, einen polarisierten Laserstrahl von einer Laserquelle (103) zum Einkopplungselement (7) zu leiten,
wobei der zweite Lichtwellenleiter (5) dazu ausgebildet ist, einen aus der Kompensationsvorrichtung (1) durch das Auskoppelungselement (9) ausgekoppelten polarisierten Laserstrahl zu einer Probe (107) zu leiten,
wobei der zweite Lichtwellenleiter (5) weiter dazu ausgebildet ist, einen von der Probe (107) reflektieren Anteil des Laserstrahls zurück zum Auskopplungselement (9) zu leiten, so dass der reflektierte Anteil des Laserstrahls durch das Auskoppelungselement (9) wieder in die Kompensationsvorrichtung (1) eingekoppelt wird, durch den dritten Anschluss (17) in den Strahlteiler (11) eintritt, linear polarisiert aus dem zweiten Anschluss (15) aus dem Strahlteiler (11) austritt, die Kompensationsstrecke (19) durchläuft, vom Faradayspiegel (29) reflektiert wird, die Kompensationsstrecke (19) erneut durchläuft, in den Strahlteiler (11) durch den zweiten Anschluss (15) eintritt, linear polarisiert aus dem ersten Anschluss (13) aus dem Strahlteiler (11) austritt und mit dem Einkopplungselement (7) in den ersten Lichtwellenleiter (3) eingekoppelt wird, und
wobei der erste Lichtwellenleiter (3) dazu ausgebildet ist, den von der Probe (107) reflektierte Anteil des Laserstrahls, der durch das Einkopplungselement (9) in den erste Lichtwellenleiter (3) eingekoppelt wurde, zu einer Auswertungsvorrichtung (113) zu leiten.

2. Polarisationserhaltende Faserstrecke (101) nach Anspruch 1, wobei der dispersionskompensierende Lichtwellenleiter (21) als Einmodenfaser ausgebildet ist.

3. Polarisationserhaltende Faserstrecke (101) nach Anspruch 1 oder 2, wobei die Kompensationsstrecke (19) eine optische Verzögerungsstrecke (23, 25) umfasst.

4. Polarisationserhaltende Faserstrecke (101) nach Anspruch 3, wobei die optische Verzögerungsstrecke (23, 25) eine piezobasierte Verzögerungsstrecke (23) umfasst, die vorzugsweise eine Einmodenfaser umfasst, die nicht polarisationserhaltend ist.

5. Polarisationserhaltende Faserstrecke (101) nach Anspruch 4, wobei die piezobasierte Verzögerungsstrecke (23) als piezobasierter Faserstrecker (23) ausgebildet ist.

6. Polarisationserhaltende Faserstrecke (101) nach Anspruch 3, 4 oder 5, wobei die optische Verzögerungsstrecke (23, 25) eine Freistahlverzögerungsstrecke (25) ohne polarisationserhaltende Elemente umfasst.

7. Polarisationserhaltende Faserstrecke (101) nach Anspruch 3, 4 oder 5, wobei die optische Verzögerungsstrecke (23, 25) eine Einmodenfaser und eine Heiz- bzw. Kühlvorrichtung umfasst, wobei die Heiz- oder Kühlvorrichtung dazu vorgesehen ist, eine Temperatur der Einmodenfaser und damit die Laufzeit des Laserstrahls durch die Einmodenfaser zu verändern.

8. Polarisationserhaltende Faserstrecke (101) nach einem der vorhergehenden Ansprüche, wobei die Kompensationsstrecke (19) einen optischen Verstärker (27) umfasst, der nicht polarisationserhaltend ausgebildet ist.

9. Polarisationserhaltende Faserstrecke (101) nach Anspruch 8, wobei der optische Verstärker (27) ein Faserverstärker ist, der von einer Einmodenfaser gebildet wird.

10. Polarisationserhaltende Faserstrecke (101) nach Anspruch 8 oder 9, wobei der optische Verstärker (27) in einem Strahlgang des Laserstrahls zwischen dem Strahlteiler (11) und dem dispersionskompensierenden Lichtwellenleiter (21) angeordnet ist.

11. Polarisationserhaltende Faserstrecke nach Anspruch 10, wobei die Kompensationsstrecke (19) die optische Verzögerungsstrecke (23, 25) umfasst und der optische Verstärker im Strahlgang des Laserstrahls zwischen dem Strahlteiler (11) und der optischen Verzögerungsstrecke (23, 25) angeordnet ist.

12. Polarisationserhaltende Faserstrecke (101) nach einem der vorhergehenden Ansprüche, wobei der Faradayspiegel (29) von einem Faraday-Rotator (33) und einer Spiegelfläche (35) gebildet wird, wobei der Faraday-Rotator (33) dazu ausgebildet ist, eine Polarisation eines durch den Faraday-Rotator (33) tretenden Laserstrahls um 45° zu drehen.

13. Polarisationserhaltende Faserstrecke (101) nach einem der vorhergehenden Ansprüche, wobei das Einkopplungselement (7) zum Einkoppeln eines Laserstrahls aus einem polarisationserhalten Wellenleiter (3) in die Kompensationsvorrichtung (1) ausgebildet ist und/oder wobei das Auskopplungselement (9) zum Auskoppeln eines Laserstrahls aus der Kompensationsvorrichtung (1) in einen polarisationserhalten Wellenleiter (5) ausgebildet ist.

14. Verwendung einer polarisationserhaltenden Faserstrecke (101) nach einem der vorhergehenden Ansprüche zum Leiten eines polarisierten Laserstrahls von einer Laserquelle (103) zu einer Probe (107), zum Leiten eines von der Probe (107) reflektierten Anteils des Laserstrahls von der Probe (107) zu einer Auswertungsvorrichtung (113) und zur Kompensation einer chromatischen Dispersion des polarisierten Laserstrahls sowie des von der Probe (107) reflektierten Anteils des Laserstrahls.
